# EUROPEAN PATENT APPLICATION

(11) **EP 2 172 321 A2**
(43) Date of publication of application: **07.04.2010**
(21) Application number: 09179488.3
(22) Date of filing: 27.12.2006
(51) Int. Cl.: B29C 37/00, B29D 11/00

(54) **Vacuum system for the transport of mold halves**

(30) Priority: 27.12.2005 US 754118 P
(62) Divisional of application: 06841170.1
(71) Applicant: Novartis AG, 4056 Basel (CH)
(72) Inventor: Russell, Todd Aldridge, Grayson, GA 30017 (US)
(74) Representative: Bohest AG

(57) **Abstract**

The invention provides a vacuum system for the transport of mold halves useful in a method for producing contact lenses, in particular silicone-hydrogel contact lenses. The improvement includes the use of a vacuum force to transport lens molds to and from a hot water deblocking process.

## Description

The present invention is related to an improved method for producing contact lenses, in particular silicone hydrogel contact lenses.

Silicone hydrogel contact lenses can be manufactured economically in large numbers by a conventional full-mold process involving disposable molds, the examples of which are disclosed in WO-A-87/04390, EP-A-0367513 or in US 5,894,002.

In a conventional full-mold process, a predetermined amount of a polymerizable or crosslinkable material typically is introduced into a disposable mold comprising a female (concave) mold half and a male (convex) mold half. The female and male mold halves cooperate with each other to form a mold cavity having a desired geometry for a contact lens. Normally, a surplus ofpolymerizable or crosslinkable material is used so that when the male and female halves of the mold are closed, the excess amount of the material is expelled out into an overflow area adjacent to the mold cavity. The polymerizable or crosslinkable material remaining within the mold is polymerized or crosslinked by means of actinic radiation (e.g., UV irradiation, ionized radiation, microwave irradiation) or by means of heating. The starting material in the mold cavity is cured to form a lens while the excess material in the overflow area is partially or completely cured to form flash. After curing, the mold is separated into the male and female mold halves with the formed lens adhered onto either male or female mold half.

After mold separation, the lens on its respective mold half (male or female) together is subjected to extraction with an organic solvent, e.g. isopropyl alcohol (IPA). This is done because the lens, in particular silicone hydrogel lens, is difficult to be removed from the mold half due to a strong adhesion between the lens and the mold half. It is believed that this strong adhesion is due to the tackiness of the surface of a silicone hydrogel lens so produced. If the lens is removed from the mold half by force, the lens can adhere to itself (curl) and further lens handling can be difficult and/or the lens can be damaged.

After the extraction, the lens, still on the mold half, is equilibrated in water and then removed from the mold half. However, the lens may still adhere onto the mold surface. Thus, in processes known in the art (e.g. WO-A-98/07554) a solvent mixture is used to de-block (or dislodge) the lens. The removed lens may further be subject to other process, such as, for example, plasma treatment, hydration, sterilization, etc.

In general, extraction and equilibration of lenses are carried out in batch processes. However, there are some disadvantages with each lens being associated with one mold half. First, mold halves take up valuable space in an extraction or equilibration tank and therefore reduce the capacity of extraction which can be carried out in each tank. Second, lens flash can be partially or completely dissolved in an extraction bath. Any dissolution of lens flash can potentially reduce extraction efficiency. Third, lens flash may be still attached to the lens even after extraction and equilibration. Any lens with flash attached thereto will be rejected and as such, production yield will be decreased.

Therefore, it would be desirable to have a reliable process for removing the lens from the lens-adhering mold half.

Methods known in the art (e.g. WO-A-93/04834 and WO-A-2006/094771) exposes the newly cured mold and lens to hot water (with or without surfactants) to de-block or dislodge the lens. Unfortunately, hot water (as well as surfactants) affect the ability of conventional gripper devices to transport the molds to and from the hot water source.

Therefore, it would be beneficial to provide an improved method and system in which each mold and lens is reliably transported to and from a hot water de-blocking process.

In one aspect, the invention provides a method for producing contact lenses. The method comprises: providing a mold including a male mold half having a first molding surface and a female mold half having a second molding surface, wherein the male and female mold halves are configured to receive each other such that a mold cavity is formed between the first and second molding surfaces when the mold is closed; dispensing a specific amount of a silicone hydrogel lens-forming material into one of the male and female mold halves; mating the male and female mold halves to close the mold; curing the silicone hydrogel lens-forming material located between the two mold halves, thereby forming a molded silicone hydrogel contact lens; separating the mold into the male and female mold halves, with the silicone hydrogel contact lens adhered on one of the male and female mold halves; transferring the molds to a hot water source, placing the molds in a hot water source so as to reduce adhesion between the lens and the lens-adhering mold half; and removing the lens from the lens-adhering mold half and placing the lens in a tray for further processing.

The transfer is preferably carried out with a servo subassembly comprising at least one syringe and at least one vacuum cylinder, wherein said vacuum cylinder is in fluid connection with said syringe and extends to generate a vacuum force via said syringes. This invention improves upon prior art (i.e. vacuum ejectors and pumps) because the syringe vacuum is able to handle vacuum applications involving water and/or moisture, whereas previous vacuum ejectors and pumps typically accumulate water over time and eventually cease operation. Additionally, the present invention reduces operating costs, as no constant supply of air or electricity is required for an ejector or pump. The simple and elegant design of the present invention also reduces equipment costs and complexity because plastic syringes and air cylinders are readily available in various sizes at substantially lower cost as compared to vacuum ejectors and pumps.

Although the present invention as described in the preferred embodiments may be used for handling light weight polypropylene contact lens molds in a wet environment, the device is capable of adaptation to include other vacuum applications traditionally solved by vacuum ejectors and pumps. In addition, this device will handle non-traditional vacuum applications involving the presence of liquids where conventional vacuum systems would otherwise fail.

### DESCRIPTION OF THE DRAWINGS

FIG. 1 is a front view of the servo subassembly of the present invention;
FIG. 2 is a side view of the servo subassembly of FIG. 1 in conjunction with a dip tank and an extraction tray;
FIG. 3 is a front view of the servo subassembly of FIG. 1, in which end-of-arm tooling (EOAT) is extended.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term.

A "hydrogel" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers.

A "silicone hydrogel" refers to a hydrogel obtained by copolymerization of a polymerizable composition comprising at least one silicone-containing monomer or at least one silicone-containing macromer.

A "monomer" means a low molecular weight compound that comprises one or more crosslinkable groups and can be crosslinked and/or polymerized actinically or thermally or chemically to obtain a crosslinked and/or polymerized polymer. As used herein, "actinically" in reference to curing or polymerizing of a polymerizable composition or material means that the curing (e.g., crosslinked and/or polymerized) is performed by actinic irradiation, such as, for example, UV irradiation, ionized radiation (e.g. gamma ray or X-ray irradiation), microwave irradiation, and the like. Thermal curing or actinic curing methods are well-known to a person skilled in the art.

A "macromer" refers to a medium and high molecular weight compound or polymer that contains functional groups capable of undergoing further polymerizing/crosslinking reactions. Medium and high molecular weight typically means average molecular weights greater than 700 Daltons. Preferably, a macromer contains ethylenically unsaturated groups and can be polymerized actinically or thermally.

A "polymer" means a material formed by polymerizing/crosslinking one or more monomers, macromers and or oligomers.

"Molecular weight" of a polymeric material (including monomeric or macromeric materials), as used herein, refers to the number-average molecular weight unless otherwise specifically noted or unless testing conditions indicate otherwise.

A "lens-forming material" refers to a polymerizable composition which can be cured (i.e., polymerized and/or crosslinked) thermally or actinically or chemically to obtain a crosslinked polymer. Lens-forming materials are well known to a person skilled in the art. In accordance with the invention, a lens-forming material comprises at least one silicon-containing monomer or macromer, or can be any lens formulations for making soft contact lenses. Exemplary lens formulations include without limitation the formulations of lotrafilcon A, lotrafilcon B, etafilcon A, genfilcon A, lenefilcon A, polymacon, acquafilcon A, balafilcon, senofilcon A, and the like. A lens-forming material can further include other components, such as an initiator (e.g., a photo initiator or a thermal initiator), a visibility tinting agent, UV-blocking agent, photo sensitizers, and the like. Preferably, a silicone hydrogel lens-forming material used in the present invention comprises a silicone-containing macromer.

The invention is generally related to a method for transporting molds and lenses to and from a hot water de-blocking process by using vacuum force.

In one aspect, the invention is directed to a method for producing contact lenses, comprising the steps of :
a) providing a mold including a male mold half having a first molding surface and a female mold half having a second molding surface, wherein the male and female mold halves are configured to receive each other such that a mold cavity is formed between the first and second molding surfaces when the mold is closed;
b) dispensing a specific amount of a silicone hydrogel lens-forming material into one of the male and female mold halves;
c) mating the male and female mold halves to close the mold;
d) curing the silicone hydrogel lens-forming material located between the two mold halves, thereby forming a molded silicone hydrogel contact lens;
e) separating the mold into the male and female mold halves, with the silicone hydrogel contact lens adhered on one of the male and female mold halves;
f) transporting the mold halves to and from a reservoir containing water with a temperature above 60°C using a vacuum system.

The vacuum system preferably comprises at least one syringe (20); and at least one vacuum cylinder (30), wherein said vacuum cylinder is in fluid connection with said syringe (20) and extends to generate a vacuum force via said syringes (20). In a more preferred embodiment, the vacuum system further comprises at least one vacuum switch (150) designed to measure said vacuum force; at least one z-axis cylinder (40) attached to a pick and place head (50); and at least one pick and place head (50) attached to end of arm tooling (60).

The hot water preferably has a temperature higher than 70°C, more preferably higher than 80°C, most preferably from 90°C to 100°C.

In another aspect, the invention is directed to a vacuum system for the transport of mold halves comprising at least one syringe (20); at least one vacuum cylinder (30), wherein said vacuum cylinder is in fluid connection with said syringe (20) and extends to generate a vacuum force via said syringes (20); at least one z-axis cylinder (40) attached to a pick and place head (50); and at least one pick and place head (50) attached to end of arm tooling (60).

Preferably the mold halves are transported from wells on an extraction tray (100) to a hot water source (120) and back to said extraction tray (100). The hot water source preferably is a hot water dip tank (120). Said end of arm tooling (60) contacts the mold halves and via vacuum force moves the mold halves to and from said hot water dip tank (120).

In a more preferred embodiment, the system further comprises a dispense valve (160) adapted to dispense fluid into wells on an extraction tray (100).

Another aspect of the invention is that the method and system are adapted to be used in high moisture or wet environments.

Methods of manufacturing mold sections for cast-molding a contact lens are generally well known to those of ordinary skill in the art. The process of the present invention is not limited to any particular method of forming a mold. In fact, any method of forming a mold can be used in the present invention. However, for illustrative purposes, the following discussion has been provided as one embodiment of forming a mold.

In general, a mold comprises at least two mold sections (or portions) or mold halves, i.e. male and female mold halves. The male mold half defines a first molding (or optical) surface defining the posterior (concave) surface of a lens and the second mold half defines a second molding (or optical) surface defining the anterior (convex) surface of a lens. The first and second mold halves are configured to receive each other such that a lens forming cavity is formed between the first molding surface and the second molding surface. The molding surface of a mold half is the cavity-forming surface of the mold and in direct contact with lens-forming material.

The first and second mold halves can be formed through various techniques, such as injection molding. These half sections can later be joined together such that a cavity forms there between. Thereafter, a contact lens can be formed within the cavity of the mold sections using various processing techniques, such as actinic or thermal curing. Examples of suitable processes for forming the mold halves are disclosed in US 4,444,711; US 4,460,534; US 5,843,346 and US 5,894,002.

Virtually all materials known in the art for making molds can be used to make molds for producing contact lenses. For example, polymeric materials, such as polyethylene (PE), polypropylene (PP), and polymethylmetacrylate (PMMA) can be used, as well as other materials that allow UV light transmission, such as quartz glass.

Preferably, one of the female and male mold halves is subjected to a surface treatment, such as, for example, a corona treatment or a plasma treatment or the like, prior to its use in order for the molded contact lens to adhere preferentially to one particular mold half when opening the mold. Such pre-treatment is for example described in US 5,894,002.

A specific amount of a polymerizable lens-forming material is typically dispensed into a female mold half by means of a dispensing device and then a male mold half is put on and the mold is closed. The specific amount is defined to be sufficient to completely form the lens in the mold cavity. As the mold closes, any excess unpolymerized lens-forming material is pressed into an overflow provided on the female or male mold half.

Subsequently, the closed mold containing the polymerizable lens-forming material is cured. A person skilled in the art knows well how to cure a lens-forming material. For example, a lens-forming material is subjected to actinic irradiation (e.g., UV radiation) at least in the region of the lens forming cavity or thermal treatment (e.g., heating in an oven) to form a lens. For actinic curing, at least one of the mold halves is transparent to the actinic radiation (e.g., UV light) at least in the region of the molding surface. Thus, at least the polymerizable lens-forming material in the lens forming cavity is polymerized. It is also possible for any polymerizable lens-forming material in the overflow to be polymerized. This is advantageous in the respect that, when the mold is opened, the excess polymerized lens-forming material then remains in the overflow of the female mold half, while the contact lens adhering to the male mold half can be removed and further processed together with male mold half.

Subsequently, the mold is opened and separated into a male mold half and a female mold half, with the molded lens adhered to one of the two mold halves.

In a preferred method, hot water is dispensed over the lens and/or in the lens-adhering mold half after the molds are separated and is allowed to penetrate into interface between the lens and the lens-adhering mold half so as to reduce adhesion between the lens and the lens-adhering mold half, e.g. as described in the U.S. published Patent Application 2006-0202368.

In another preferred method, the molds are transferred to a hot water source and are immersed in or exposed to the hot water.

Because the temperature of the water is higher than 60°C, preferably higher than 70°C, more preferably higher than 80°C, most preferably from 90°C to 100°C, traditional transfer methods, such as 3-finger mechanical gripper or tweezer-type gripper, for removing the molds may fail.

According to the present invention a vacuum system may be used to transfer the molds to and remove the molds from a hot water source, such as for example a hot water dip tank.

An exemplary vacuum system according to the invention may include plastic syringes coupled to a mechanical actuator to generate and maintain a vacuum. In one embodiment of the present invention, the mechanical actuator may be an air cylinder, preferably a vacuum cylinder in fluid connection with said syringe.

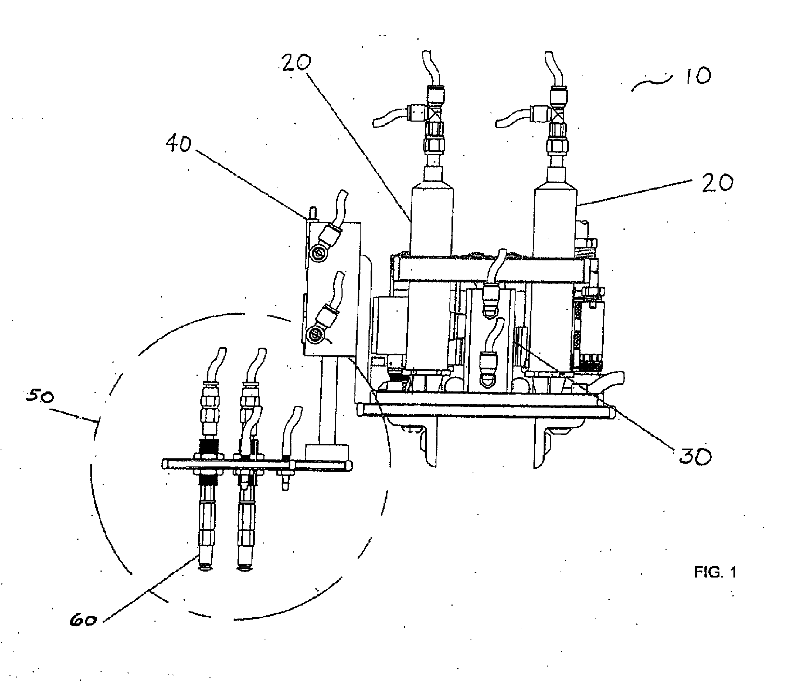

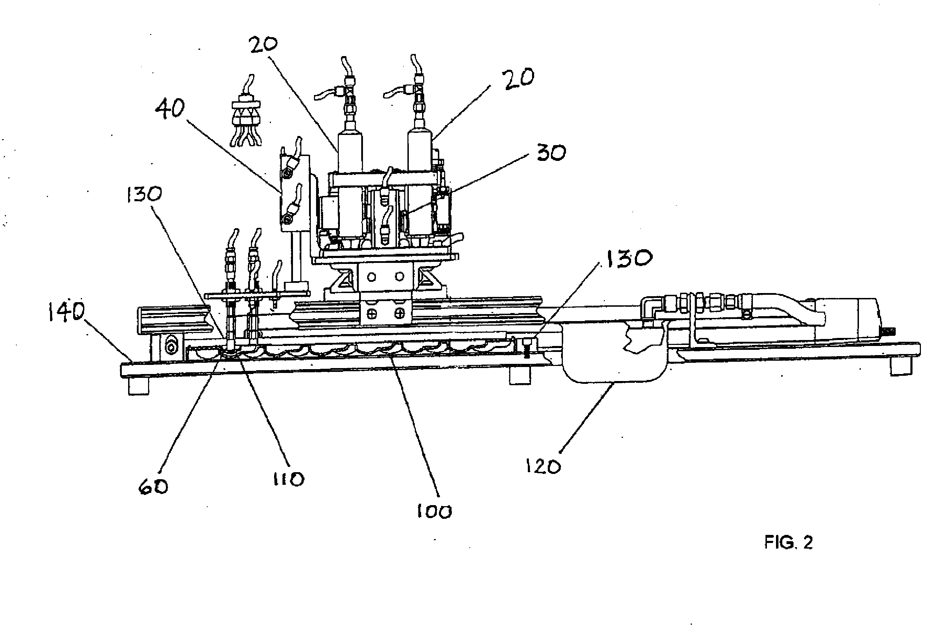

An assembly of the present invention is shown in FIG. 1, FIG. 2 and FIG. 3. FIG. 1 depicts a servo subassembly **10.** Subassembly **10** may include syringes **20,** vacuum cylinder **30,** z-axis cylinder **40,** a pick and place (p&p) head **50,** and end of arm tooling (EOAT) **60.** FIG. 2 shows subassembly **10** in place with other components. Subassembly **10** preferably may be positioned over an extraction tray **100** and/or a dip tank **120** and is adapted to move between extraction tray **100** and dip tank **120.** Extraction tray **100** contains mold halves **110** and may contain wells for front curve or base curve molds.

Referring again to FIG. 2, more specifically, after curing but before exposure to hot water, subassembly **10** is positioned over the mold halves **110.** Before such action, the molds halves **110** are preferably in an extraction tray **100** that is located in a specific position, such that end of arm tooling (EOAT) **60** may properly orient over mold halves **110.** In one embodiment of the present invention, proper positioning may be ensured my using one or more tray stops **130.** Next, the z-axis cylinder **40** lowers the p&p head **50** of subassembly **10** so that the end of arm tooling (EOAT) **60** is in contact with mold halves **110.** Once contact is made, a vacuum cylinder **30** preferably extends to generate vacuum force via the syringes **20,** thereby capturing the mold halves **110** via the EOAT **60.** The Z-axis cylinder **40,** which controls the p&p head **50** is then preferably retracted with the mold halves **110** now intact.

Once servo subassembly **10** is positioned over dip tank **120** with mold halves **110,** Z-axis cylinder **40** lowers mold halves **110** into the dip tank **120** for an appropriate period of time. In one embodiment of the invention, mold halves **110** may be dipped into the tank for approximately 2-5 seconds. In another embodiment, mold halves **110** may be dipped for approximately 3 seconds. In one embodiment of the present invention, the dip tank water level and temperature may be controlled by a re-circulating hot water bath (not shown) that maintains water temperature at a predetermined setpoint. In this embodiment, the bath may automatically monitor the water level throughout the system and will automatically refill water when needed. After the molds have been in the bath for the proper amount of time, the z-axis cylinder **40** preferably raises the mold halves **110** from the dip tank **120** and the servo subassembly **10** transports them back to their original position in the extraction tray **100.**

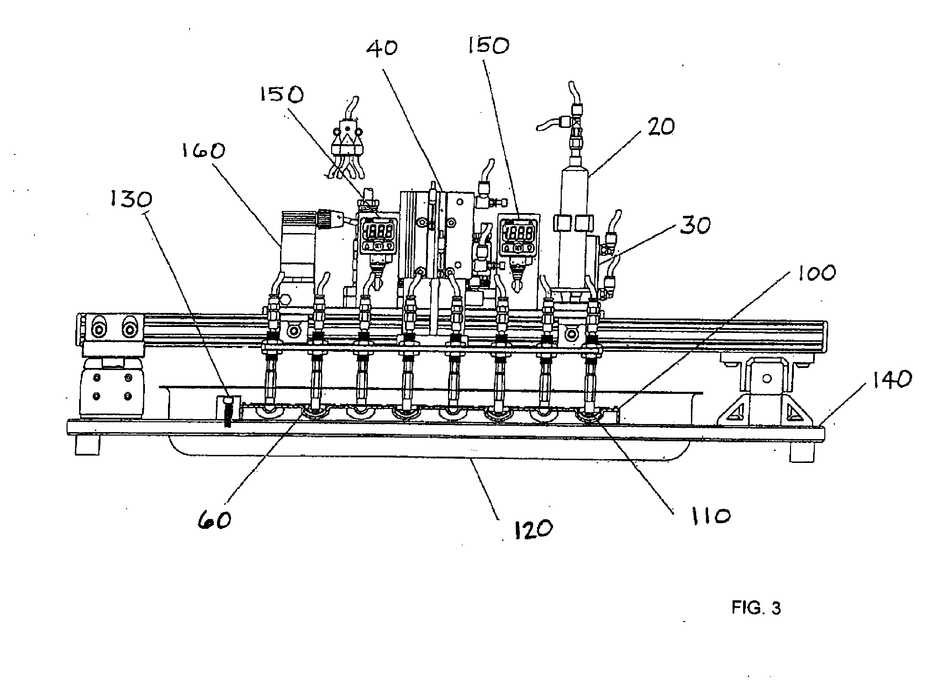

Referring to FIG. 3, after the mold halves **110** are captured by the EOAT **60,** z-axis cylinder **40** preferably lowers mold halves **110** back into positions and releases them to the extraction tray **100.**

In some embodiments of the present invention, particularly when base curve mold halves are used, dispense valves **160,** shown in FIG. 3, may deposit a small amount of water into each of the wells on extraction tray **100** while the p&p head **50** is in the down position. This procedure keeps the lenses hydrated while the de-blocking operation proceeds for subsequent lenses. Front curve molding does not require this additional step, as the mold half serves as a cup to hold an amount of water against the lens following the dip process.

In one embodiment of the present invention, part presence may be checked via vacuum switches **150** that measure the generated vacuum level. If the vacuum level is sufficient, signifying that part pickup was successful, the servo subassembly moves to a dip tank **120.** Part presence may be checked again via vacuum switches **150** after the dip operation to ensure the mold halves **110** remain captured by the EOAT **60.** Specifically, part (mold half) presence may be checked by measuring the generated vacuum level with vacuum switches **150** (shown in FIG. 3). If the vacuum level is not sufficient, the z axis cylinder **40** lowers the p&p head **50,** releases the vacuum (and therefore the mold halves **110)** by retracting vacuum cylinder **30** and the z axis cylinder **40** retracts. Operation may be suspended until an operator can determine and correct the problem.

In FIG. 2 and FIG. 3 the entire system described rests on a base plate **140.**

In accordance with the invention, after dislodging from the mold half, the lens is placed in a tray for further processing, such as, for example, extraction, hydration, surface treatment, sterilization etc. As used herein, a tray is intended to describe a device which can hold a plurality of contact lenses and which is used in lens processing. Preferred trays are those described in U.S. published patent application No. 2003-0024829.

It is understood that a method of the invention can be performed manually or automatically under control of a computer. A person skilled in the art will known how to automate a method of the invention.

## Claims

1. A vacuum system for the transport of mold halves comprising:
at least one syringe (20);
at least one vacuum cylinder (30), wherein said vacuum cylinder is in fluid connection with said syringe (20) and extends to generate a vacuum force via said syringes (20);
at least one z-axis cylinder (40) attached to a pick and place head (50); and
at least one pick and place head (50) attached to end of arm tooling (60).

2. The system of claim 1, wherein said mold halves are transported from wells on an extraction tray (100) to a hot water source (120) and back to said extraction tray (100).

3. The system of claim 2, further comprising vacuum switches (150) that are adapted to measure the generated vacuum force.

4. The system of claim 2, wherein said end of arm tooling (60) contacts the mold halves and via vacuum force moves the mold halves to and from a hot water dip tank (120).

5. The system of claim 2, further comprising a dispense valve (160) adapted to dispense fluid into wells on an extraction tray (100).

6. The system of any of the preceding claims 1 to 5, wherein said system is adapted to be used in high moisture or wet environments.
